**Europäisches Patentamt**

**European Patent Office**

**Office européen des brevets**

(19)

(11) Veröffentlichungsnummer : **0 020 287**
**B1**

(12)

# EUROPÄISCHE PATENTSCHRIFT

(45) Veröffentlichungstag der Patentschrift :
09.03.83

(51) Int. Cl.³ : **B 65 G 57/18, B 65 G 57/26**

(21) Anmeldenummer : **80730035.5**

(22) Anmeldetag : **14.05.80**

(54) **Vorrichtung zum Abstapeln von Stapellagen.**

(30) Priorität : **21.05.79 DE 2920935**
**21.05.79 DE 2920936**
**21.05.79 DE 2920937**

(43) Veröffentlichungstag der Anmeldung :
**10.12.80 Patentblatt 80/25**

(45) Bekanntmachung des Hinweises auf die Patenterteilung : **09.03.83 Patentblatt 83/10**

(84) Benannte Vertragsstaaten :
**AT BE CH FR GB IT LI LU NL SE**

(56) Entgegenhaltungen :
**AT B 331 721**
**DE A 2 228 301**
**DE A 2 523 301**
**DE A 2 551 859**
**DE A 2 751 605**
**DE A 2 757 161**
**DE B 1 556 119**
**DE B 2 259 394**
**DE B 2 735 469**
**DE C 1 067 732**
**US A 2 686 603**
**US A 3 338 431**
**US A 3 738 510**
**US A 3 904 044**

(73) Patentinhaber : **Schiepe, Heinz**
**Griegstrasse 44**
**D-1000 Berlin 33 (DE)**

(72) Erfinder : **Schiepe, Heinz**
**Griegstrasse 44**
**D-1000 Berlin 33 (DE)**

(74) Vertreter : **Lüke, Dierck-Wilm, Dipl.-Ing.**
**Gelfertstrasse 56**
**D-1000 Berlin 33 (DE)**

## Vorrichtung zum Abstapeln von Stapellagen

Die Erfindung bezieht sich auf eine Vorrichtung zum Abstapeln von Stapellagen gemäß dem Oberbegriff des Anspruches 1.

Bei einer solchen aus der US-A-3 338 431 vorbekannten Vorrichtung wird mittels Schalter und Abtaster der Differenzweg ermittelt, der dem Rückhalter aufgegeben wird, der dann in gleicher Zeit wie die Auslegerarme um diesen Differenzweg zurückgefahren wird, wodurch die einzelnen Bretter unter Bildung von Luftspalten auf dem Stapel abgelegt werden können, wobei Vorderkante und Hinterkante des ersten bzw. letzten Brettes bündig mit dem Stapel liegen. Die Steuerung des Rückhalters erfolgt über Ritzel und Zahnstangen unter Wirkung eines Elektromotors. Die Ausbildung eines mittels Zahnstangen bewegten Rückhalters ist baulich sehr aufwendig und insbesondere wegen des zusätzlich erforderlichen Antriebsmotors teuer in der Herstellung.

Der Erfindung liegt von daher die Aufgabe zugrunde, eine Vorrichtung der gattungsgemäßen Art dahingehend auszubilden, das bei baulich einfacher und preiswerter Ausführung an der Stapelvorrichtung bereits vorhandene Aggregate und Bauteile verwendbar sind.

Die Lösung dieser Aufgabe ergibt sich aus den kennzeichnenden Merkmalen des Anspruches 1. Die für die Steuerung des Rückhalters verwendeten Zylinderkolbeneinheiten sind bei Stapelvorrichtungen der gattungsgemäßen Art regelmässig bereits vorhanden, insbesondere als Zylinderkolbeneinheiten zur Bewegung der Auslegearme und zur Betätigung bereits bisher bekannter Rückhalter, welche die Stapellage beim Zurückziehen der Auslegearme sichern. Die erfindungsgemäße Lösung beinhaltet eine Kombination zweier Zylinderkolbeneinheiten, nämlich der pneumatischen Arbeitszylinderkolbeneinheit zur Durchführung der Rückzugsbewegung des Rückhalters und der hydraulischen Differenzweg-Zylinderkolbeneinheit zur Verzögerung der Rückzugsbewegung der pneumatischen Zylinderkolbeneinheit. Die Verzögerung ist dabei abhängig von den Querschnitten der jeweils eingeschalteten Drosseln. Deren Durchlaßquerschnitte werden erfindungsgemäß von den Endschaltern gesteuert.

Mit der erfindungsgemäßen Vorrichtung wird kontinuierlich zwischen jeweils zwei abzulegenden Brettern ein horizontaler Luftspalt derart gebildet, dass nach bündigem Ablegen des letzten Brettes an der Hinterkante des Stapels die Gesamtbreite der gebildeten horizontalen Luftspalte der ursprünglich ermittelten Differenz entspricht.

Die erfindungsgemäße Vorrichtung ist somit auch geeignet, Stapellagen unterschiedlicher Gesamtbreite mit horizontalen Luftspalten auf einen zu bildenden Stapel abzulegen, wobei das erste und das letzte Brett jeweils bündig mit der Vorder- bzw. Hinterkante des Stapels liegt. Die Vorrichtung kann an herkömmliche Stapelvorrichtungen angebaut werden, vorausgesetzt, diese weisen horizontal ausfahrbare Auslegerarme auf.

Weitere vorteilhafte Ausgestaltungen der Erfindung ergeben sich aus den Unteransprüchen. Für diese wird Schutz nur in Verbindung mit den Merkmalen des Anspruches 1 beansprucht. Insbesondere wird durch die Merkmale des Unteranspruches 5 dem Rückhalter eine weitere Funktion gegeben, nämlich das Vorschieben der Stapellage.

Figur 1 eine Seitenansicht der Vorrichtung zum Abstapeln von Stapellagen mit auf einem Hubbalken im Bereich der Oberseiten der Ständer gebildeter Stapellage ohne Luftspalte,

Figur 2 Anordnungen von Stapellagen unterschiedlicher Breiten auf dem Hubbalken (linker Teil der Figur) und auf den ausgefahrenen Auslegerarmen (rechter Teil der Figur),

Figur 3 eine Seitenansicht der Vorrichtung gemäss Fig. 1 mit ausgefahrenen Auslegerarmen mit darauf befindlicher Stapellage und

Figur 4 bis 7 verschiedene Stellungen der Auslegerarme und Rückhalter beim Abstapeln einer Stapellage mit Luftspalten.

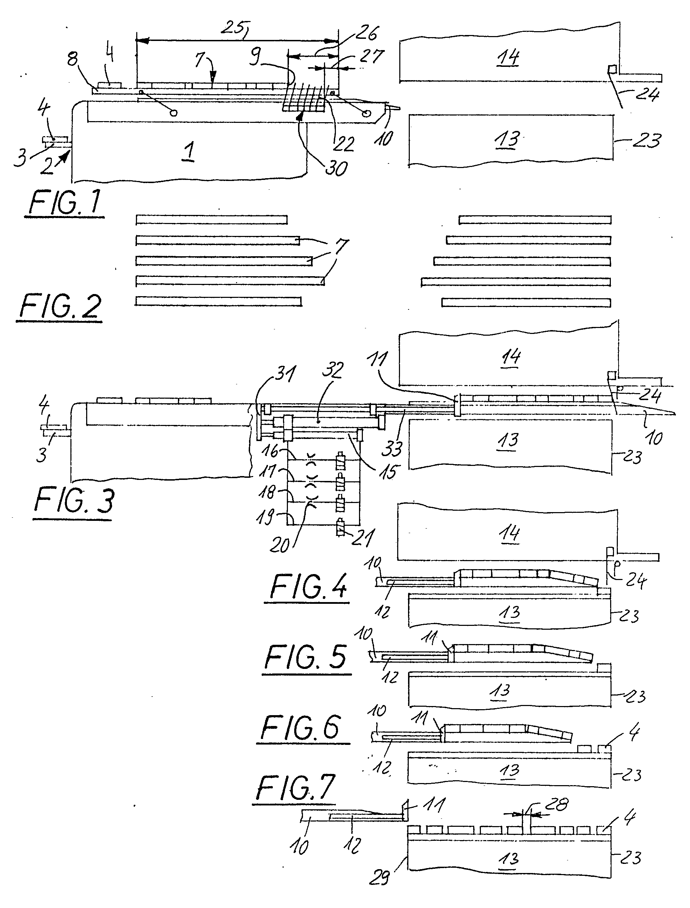

In Fig. 1 sind links der obere Teil eines Ständers 1 und rechts der obere Teil eines Stapels 13 mit darüber befindlichem Leistenmagazin 14 dargestellt. Der Stapel 13 erstreckt sich in zur Zeichenebene senkrechter Richtung. Gegenüber dem Stapel 13 sind mindestens zwei in Abständen voneinander und parallel zueinander stehende Ständer 1 angeordnet.

Die Ständer 1 umfassen in ihrem linken Teil einen Umlaufförderer 2 mit Mitnehmern 3, die Bretter 4 auf die Oberseiten der Ständer 1 zur Bildung von Stapellagen 7 anheben. Zur Bildung der Stapellage 7 ist im Bereich der Oberseiten der Ständer 1 jeweils ein Hubbalken 8 angeordnet, der in nicht näher beschriebener Weise heb- und senkbar ist. An den Ständern 1 sind Auslegerarme 10 gelagert und mittels nicht dargestellter Antriebselemente horizontal ein- und ausfahrbar gelagert.

Im Bereich der Vorderkante 9 der auf den Hubbalken 8 zu bildenden Stapellage 7 sind an den Ständern 1 mehrere Endschalter 22 in Abständen an einer Schalterleiste 30 angeordnet und von der Vorderkante 9 der jeweiligen Stapellage 7 betätigbar. Die Schalterleisten 30 sind in Abhängigkeit von der Breite des zu bildenden Stapels 13 horizontal verstellbar angebracht.

An den Oberseiten der Ständer 1 sind ferner Rückhalter 11 mittels Schubstangen 33 gelagert, die an den, den Rückhaltern 11 entgegengesetzten Enden jeweils ein Joch 31 tragen, an welchem eine pneumatische Zylinderkolbeneinheit 32 und eine hydraulische Zylinderkolbeneinheit 15 jeweils mit ihren Kolbenstangen angreifen, die somit über das Joch 31 fest miteinander verbunden sind. Die vor und hinter dem Kolben der hydraulischen Zylinderkolbeneinheit 15 gelegenen Zylinderräume sind über parallel geschaltete Leitungen 16 bis 19 verbunden. Die Leitungen 16, 17 und 18 weisen jeweils eine Drossel 20 unterschiedlicher Drosselquerschnitte und ein Magnetventil 21 auf. Die Leitung 19 weist nur ein Magnetventil 21 auf. (Fig. 3).

Oberhalb der Vorderkante 23 des Stapels 13 ist am Leistenmagazin 14 ein Endschalter 24 angeordnet, der von der Vorderkante 9 einer Stapellage 7 betätigbar ist, wenn diese von den Auslegerarmen 10 über den Stapel 13 bewegt und mittels der Rückhalter 11 vorgeschoben worden ist.

Die Endschalter 22 der Schalterleiste 30, der Endschalter 24 und die Magnetventile 21 sind über eine geeignete, nicht näher dargestellte Steuereinrichtung miteinander verbunden.

Die beschriebene Vorrichtung arbeitet wie folgt :

Auf den Hubbalken 8 können Stapellagen 7 unterschiedlicher Breiten gebildet werden, deren mögliche Breiten im linken Teil der Fig. 2 dargestellt sind. Dabei sind sämtliche Stapellagen 7 aufgrund der Bildung mittels der Anschläge der Mitnehmer 3 links bündig. Bezogen auf die Gesamtbreite 25 des Stapels 13 ergeben sich der maximale Differenzweg 26 zur kleinsten Breite einer Stapellage 7 und der minimale Differenzweg 27 zur grössten Breite einer Stapellage 7.

Diese Differenzwege werden jeweils durch die Vorderkante 9 einer jeden Stapellage 7 bestimmt. Die Vorderkante 9 betätigt jeweils einen oder mehrere der Endschalter 22 der Schalterleiste 30. Der oder die jeweils betätigten Endschalter 22 geben Schaltimpulse an die Steuereinrichtung ab, die zur Betätigung eines oder mehrerer der Magnetventile 21 zur Steuerung der Drosseln 20 umgesetzt wird.

Die jeweils betätigten Endschalter 22 geben zugleich ein Signal an die Steuereinrichtung ab, das Schaltimpulse auslöst, um den Hubbalken 8 abzusenken, damit die Stapellage 7 auf den Auslegerarm 10 abzulegen und den Auslegerarm 10 auszufahren, wie es in Fig. 3 dargestellt ist. Bei ausgefahrenem Auslegerarm 10 wird ferner ein Signal an den Rückhalter 11 gegeben, der mittels der pneumatischen Zylinderkolbeneinheit 32 vorgefahren wird, solange bis die Vorderkante 9 der Stapellage 7 den Endschalter 24 an der Vorderkante 23 des Stapels 13 betätigt. Bei Betätigung dieses Endschalters 24 wird die Zylinderkolbeneinheit 32 umgesteuert, und es werden entsprechend dem eingeschalteten Endschalter 22 der Schalterleiste 30 die zugehörigen Magnetventile 21 zur Einschaltung der entsprechenden Drosseln 20 betätigt. Dabei kann dem ersten Endschalter 22 die Drossel 20 der Leitung 16 zugeordnet sein, dem zweiten Endschalter 22 die Drossel 20 in der Leitung 17 und dem dritten Endschalter die Drossel 20 in der Leitung 18. Dem vierten Endschalter sind die Drosseln 20 in den Leitungen 16 und 17 zugeordnet. Dem fünften Endschalter 22 die Drosseln 20 in den Leitungen 17 und 18 und dem sechsten Endschalter alle Drosseln 20 in den Leitungen 16 bis 18. Demgemäss werden die Magnetschalter 21 von den Endschaltern 22 betätigt.

Die Rückzugsbewegung der Rückhalter 11 unter Wirkung der pneumatischen Zylinderkolbeneinheit 32 erfolgt nun verzögert durch die hydraulische Zylinderkolbeneinheit 15, wobei die Verzögerung abhängig ist von den Querschnitten der jeweils eingeschalteten Drosseln 20. Beim Rückfahren des Auslegerarmes 10 und der Rückhalter 11 werden nun die einzelnen Bretter 4 der jeweiligen Stapellage 7 einzeln nacheinander auf den Stapel 13 abgelegt, wozu die Vorderkante der Ausleger 10 abgeschrägt ist. Die Auslegerarme 10 werden nun zusammen mit den Rückhaltern 11, die durch die Querschnitte der Drosseln 20 gesteuert werden, gemeinsam derart zurückbewegt, dass während der Auslegerarm 10 die volle Gesamtbreite des Stapels 13 als Arbeitsweg zurücklegt, der Rückhalter 11 nur den Differenzweg 26, 27 oder einen dazwischen liegenden Differenzweg zurücklegt. Hierdurch werden die einzelnen Bretter jeder Stapellage 7 mit horizontalen Luftspalten 28 abgelegt, wobei das erste abgelegte Brett und das letzte abgelegte Brett jeweils bündig mit der Vorderkante 23 bzw. der Hinterkante 29 des Stapels 13 abgelegt werden.

Die Magnetventile 21 der hydraulischen Zylinderkolbeneinheit 15 bleiben jeweils solange geschlossen, bis in den Arbeitskammern der doppelt wirkenden pneumatischen Zylinderkolbeneinheit 32 jeweils ein ausreichender Arbeitsdruck aufgebaut ist. Hierdurch werden die Arbeitskolben der pneumatischen Zylinderkolbeneinheiten 32 jeweils solange festgehalten, bis die Magnetventile 21 geöffnet sind. Ein sofortiger Arbeitsbeginn der pneumatischen Zylinderkolbeneinheiten 32 wird dadurch erreicht.

Das Magnetventil 21 in der Leitung 18 dient zur Steuerung der Ausfahrbewegung der Rückhalter 11 und wird unter Wirkung eines Schaltsignales vom Endschalter 24 wieder geschlossen.

**Ansprüche**

1. Vorrichtung zum Abstapeln von Stapellagen (7) aus stab- oder brettförmigem Stückgut auf einem Stapel (13) vorgegebener Gesamtbreite unter Bildung horizontaler Luftspalten mittels horizontal bewegbarer Auslegerarme und horizontal bewegbarer Rückhalter (11), deren als Differenzweg zwischen der Gesamtbreite des zu bildenden Stapels und der Gesamtbreite der Stapellage ohne Luftspalten zurückzulegender Arbeitsweg durch Abtasten der Kanten der vorgebildeten Stapellage mittels Endschaltern (22) ermittelt wird und die um diesen Differenzweg vorgefahren und in gleicher Zeit wie die Auslegerarme (10) um den ermittelten Differenzweg zurückgefahren werden, dadurch gekennzeichnet, dass die Rückhalter (11) mit einer als pneumatische Zylinderkolbeneinheit ausgebildeten Arbeitszylinderkolbeneinheit (32) und einer als hydraulische Zylinderkolbeneinheit ausgebildeten Differenzweg-Zylinderkolbeneinheit (15) verbunden

sind, deren Kolbenstangen miteinander festverbunden sind, und dass die vor und hinter dem Kolben der Differenzweg-Zylinderkolbeneinheit (15) gelegenen Zylinderräume über Drosseln (20) unterschiedlicher Durchlassquerschnitte verbindbar sind, die unter Steuerung durch die Endschalter (22) einzeln oder gemeinsam einschaltbar sind.

2. Vorrichtung nach Anspruch 1, dadurch gekennzeichnet, dass den Drosseln (20) von den Endschaltern (22) betätigbare Magnetventile (21) vorgeschaltet sind.

3. Vorrichtung nach Anspruch 1 oder 2, dadurch gekennzeichnet, dass mehrere Endschalter (22) im Bereich der Vorderkanten (9) der vorgebildeten Stapellage (6) in Abständen voneinander auf einer Schalterleiste (10) angeordnet sind.

4. Vorrichtung nach Anspruch 3, dadurch gekennzeichnet, dass die Schalterleiste (10) in Abhängigkeit von der Gesamtbreite (25) des Stapels (2) verstellbar angeordnet ist.

5. Vorrichtung nach einem der Ansprüche 1 bis 4, dadurch gekennzeichnet, dass im Bereich der Vorderkante (23) des Stapels (13) ein von der Vorderkante (9) der ausgefahrenen vorgebildeten Stapellage (7) betätigbarer Endschalter (24) angeordnet ist, der bei Betätigung durch die von den Rückhaltern (11) vorgeschobene vorgebildete Stapellage (7) die Arbeitsrichtung der als doppelt wirkende pneumatische Zylinderkolbeneinheit ausgebildeten Arbeitszylinderkolbeneinheit (32) umschaltet.

## Claims

1. An apparatus for destacking staple layers (7) of barshaped or board-shaped goods on a stack having a given total width, by forming horizontal air-gaps by means of horizontally movable cantilever arms and horizontally movable retaining means (11), the work travel of which to be covered without air-gaps as a difference travel between the total width of the staple to be formed and the total width of the stack being determined by scanning the edges of the preformed stack with the aid of limit switches (22), and which are moved forward by said difference travel, and, within the same time as the cantilever arms (10) are moved back by the same difference travel previously determined, characterized in that the retaining means (11) are connected with a working cylinder piston unit (32) formed as a pneumatic cylinder piston unit, and a difference travel cylinder piston unit (15) formed as an hydraulic cylinder piston unit, the piston rods of which being integrally connected with one another, and that the cylinder spaces existing before and behind the piston of the difference travel cylinder piston unit (15) can be connected through throttle valves having different openings, and being controlled by the limit switches (22) can be individually or commonly controlled.

2. An apparatus according to the claim 1, characterized in that electrovalves (21) to be operated by the limit switches (22) are connected in series to the throttle valves (20).

3. An apparatus according to the claims 1 or 2, characterized in that several limit switches (22) within the range of the front edges (9) of the preformed stack (6) are equally spaced on a switch panel (10).

4. An apparatus according to the claim 3, characterized in that the switch panel (10) is adjustably arranged subject to the total width (25) of the stack (2).

5. An apparatus according to one of the claims 1 to 4, characterized in that within the range of the front edge (23) of the stack (13) a limit switch to be operated from the front edge of the extended preformed stack (7) is arranged, which, when operated by the preformed stack (7) advanced by the retaining means (11) reverses the direction of working of the working cylinder piston unit (32) formed as a double-acting pneumatic cylinder piston unit.

## Revendications

1. Dispositif dépilateur pour des couches empilées (7) consistantes en marchandises en colis en forme de barres ou planches sur une pile (13) d'une largeur totale prédestinée en formant des fentes horizontales d'aération au moyen de bras-leviers mobiles horizontalement et d'arrêts (11) mobiles horizontalement, dont la course de travail à parcourir sans fentes d'aération comme course différentielle entre la largeur totale de la pile à former et la largeur totale de la pile constituée de couches est déterminée en palpant les bords de la pile préformée au moyen d'interrupteurs fin de course, et qui sont avancés de cette course différentielle et simultanément avec les bras-leviers (10) sont ramenés de cette course différentielle déterminée, caractérisé en ce que les arrêts (10) sont reliés à un piston d'un cylindre moteur (32) formé comme une unité pneumatique d'un piston de cylindre et à un piston de cylindre de course différentielle formé comme une unité hydraulique d'un piston de cylindre, dont les tiges de piston sont reliées fermement l'une à l'autre, et que les espaces cylindriques situés devant et derrière le piston de l'unité de piston de cylindre de la course différentielle (15) peuvent être reliés l'un à l'autre par l'intermédiaire de dispositifs d'étranglement (20) comportant des sections de passage différentes, qui peuvent être mises en circuit séparément ou communément sous la commande par les interrupteurs fin de course (20).

2. Dispositif conformément à la revendication 1, caractérisé en ce que des soupapes à aimant (21) à actionner par les interrupteurs fin de course (22) sont montées en série aux dispositifs d'étranglement (20).

3. Dispositif conformément à la revendication 1 ou 2, caractérisé en ce que plusieurs interrupteurs fin de course (22) dans la portée des arêtes avant (9) de la pile préformée (6) sont disposés à distances égales sur un liston disjoncteur (10).

4. Dispositif conformément à la revendication 3, caractérisé en ce que le liston disjoncteur (10) est disposé réglable en fonction de la largeur totale (25) de la pile (2).

5. Dispositif conformément à une ou l'autre des revendications 1 à 4, caractérisé en ce que dans la portée de l'arête avant (23) de la pile (13) est disposé un interrupteur fin de course (24) à être actionné par l'arête avant (9) de la pile préformée et sortie (7), qui après l'actionnement par la pile (7) préformée et avancée par les arrêts (11) commute la direction de travail de l'unité de piston du cylindre moteur (32) formée comme unité pneumatique de piston de cylindre à double effet.

FIG.1

FIG.2

FIG.3

FIG.4

FIG.5

FIG.6

FIG.7